# EUROPÄISCHE PATENTSCHRIFT

(11) **EP 0 549 644 B1**
(45) Veröffentlichungstag und Bekanntmachung des Hinweises auf die Patenterteilung: **27.12.1995**
(21) Anmeldenummer: 91916473.1
(22) Anmeldetag: 16.09.1991
(51) Int. Cl.: G01S 7/06, G01S 7/22

(54) **VERFAHREN UND SCHALTUNGSANORDNUNG ZUR DARSTELLUNG VON RADAR-ECHO-SIGNALEN**
PROCESS AND CIRCUITRY FOR DISPLAYING RADAR ECHO SIGNALS
PROCEDE ET CIRCUITS DE REPRESENTATION DE SIGNAUX D'ECHO DE RADAR

(30) Priorität: 18.09.1990 CH 3022/90
(43) Veröffentlichungstag der Anmeldung: 07.07.1993
(73) Patentinhaber: JFS ELECTRONIC STURTZEL & CO. AG, CH-6343 Rotkreuz (CH)
(72) Erfinder: STURTZEL, Jorg, Felix, CH-6343 Rotkreuz (CH); KNUESEL, Rudolf, CH-6343 Rotkreuz (CH)
(74) Vertreter: Roshardt, Werner Alfred, Dipl.-Phys.
(86) Internationale Anmeldenummer: EP9101760
(87) Internationale Veröffentlichungsnummer: WO9205454

(56) Entgegenhaltungen:
- DE-A- 1 623 586
- DE-A- 2 318 856
- DE-A- 3 346 154
- DE-B- 1 279 132
- DE-B- 2 061 129
- DE-C- 2 066 199
- US-A- 3 027 485
- US-A- 4 107 673
- US-A- 4 906 940
- SOVIET INVENTIONS ILLUSTRATED Section EI, Week 8209, 14. April 1982 Derwent Publications Ltd., London, GB; Class S, AN 82-C4457E/09 & SU,A,832 507 (CHIEF GEOPHY OBSERV) 23 May 1981 siehe Zusammenfassung
- PATENT ABSTRACTS OF JAPAN vol. 6, no. 248 (P-160)(1126) 7. Dezember 1982 & JP,A,57 146 175 ( KOUDEN SEISAKUSHO K.K. ) 9. September 1982
- Süss et.al."Passive Millimeter-Wave Imaging", ALTA FREQUENZA, Vol. LVIII-N. 5-6, 9/12-1989, Seiten 457-465
- Ebert "Digitale Verarbeitung von Radarsignalen in der Flugsicherung,INTERAVIA, 3/1969, S. 293-296
- Plowman "Automatic Radar Data Extraction by Storage Tube and Delay Line Techniques,JOURNAL BRIT I.R.E., OCTOBER 1963, S. 317-326

## Beschreibung

Die Erfindung bezieht sich auf ein Verfahren und eine Schaltungsanordnung zur Darstellung von Radar-Echo-Signalen.

Es ist bekannt, daß bei Radargeräten, welche der Navigation, der Überwachung oder hiermit verwandten Zwecken dienen, empfangene Echos auf einem Bildschirm derart dargestellt werden, daß sich eine Echostruktur der abgetasteten Objekte ergibt.

Es ist ferner bekannt, daß die Echos in ihrer Amplitude abhängig sind von der Größe, Entfernung und den Reflektionseigenschaften der abgetasteten Ziele.

Das sich aus dieser Echostruktur ergebende Radarbild erscheint zwangsläufig in einer an- und abschwellenden Helligkeit auf dem Radarbildschirm.

Um diesem häufig unerwünschten Effekt zu begegnen, sind verschiedene Maßnahmen bekannt, wie zum Beispiel eine farbige Darstellung in Abhängigkeit von der Echoamplitude oder bei monochromatischer Darstellung die Echos auf gleiche Amplitudenwerte zu verstärken, um einen größeren Informationsgehalt zu erreichen.

Bei der letztgenannten Darstellung der Echo-Signale hat sich jedoch gezeigt, daß bei Echostrukturen von flächenhaft ausgedehnten Objekten große helle Flächen auf dem Radarbild erscheinen, was bei einer Vielzahl solcher Objekte eine Helligkeitsübersteuerung des Radarbildes bewirkt. Insbesondere bei Nachtfahrten stört diese Bildhelligkeit, so daß der Bedienende die Schirmhelligkeit in der Regel stark reduziert. Als Folge davon wird auch die Intensität kleinerer, punktförmiger oder schlecht reflektierender Objekte auf dem Radarbild soweit reduziert, daß diese nicht oder nur sehr schlecht erkannt werden können.

Aus der SU 832 507 ist ein Anzeigegerät für meteorologische und navigatorische Aufnahmen bekannt. Bei der Signal aufbereitung wird zum Signal selbst dessen Ableitung addiert, so dass Konturen - bei Unterscheidung von schwachen und starken Gradienten - klar gezeigt werden. Angezeigt wird also stets eine nicht auftrennbare Kombination aus tatsächlichem und abgeleitetem Signal. Der Rand wird damit zwar überhöht, im "Inneren" der Kontur können jedoch amplitudenmässig kleinere, aber durch die Ableitung beträchtlich verstärkte Amplitudenvariationen auftreten, die die Uebersichtlichkeit und Lesbarkeit des dargestellten Radar-Echo-Signals beeinträchtigen.

Aus der JP 57 146 175 ist eine signalamplitudenabhängige Farbdarstellung bekannt. Jeder Amplitude ist eine Farbe zugeordnet. Eine Aenderung der Signalamplitude führt in jedem Fall zu einer entsprechenden Farbänderung. Eine solche Bilddarstellung ist schwierig zu interpretieren und für Navigations-Radar-Sichtgeräte nicht brauchbar.

Aus der Druckschrift DE 20 61 129 B2 ist ein System bekannt, welches aus dem Radarbild Objekte extrahiert, deren Abmessungen innerhalb eines vorgegebenen Bereiches liegen. Es geht nicht um die Darstellung von flächenhaften Objekten. Gemessen und mit einer unteren resp. oberen Schwelle verglichen wird jeweils nur die (azimutale) Länge eines Objektes. Grössere Landmassen werden nur durch die dem Radar näher liegende "Umrisslinie" dargestellt. Es kann dabei nicht von einer Flächenumrisslinie im eigentlichen Sinn gesprochen werden, da keine Fläche von der Grenzlinie eingeschlossen (umrissen) wird.

Die Veröffentlichung SUESS, H., GRUENER, K.: Passive Millimeter-Wave Imaging. In: ALTA/Frequenza, Sept.-Dec. 1989, Nr. 5-61, Seiten 457 ff befasst sich mit der Verarbeitung von Bildern, die mit passiven Millimeterwellengeräten aufgenommen worden sind. Um kleine Objekte zu extrahieren, sollen spezielle Kantenüberhöhungsalgorithmen eingesetzt werden. Wie aus den gezeigten Beispielen zu erkennen ist, hängen die Ergebnisse stark vom gewählten Algorithmus ab. Ganz offensichtlich führt keiner der vorbekannten Algorithmen zu einem solch guten Bild wie die Erfindung. Insbesondere wird kein Bildverarbeitungsalgorithmus spezifiziert, der dazu führt, dass im Inneren der umrissenen Fläche eine konstante, signalamplitudenunabhängige, reduzierte Helligkeit vorherrscht.

Aus der Offenlegungsschrift DE 33 46 154 A1 ist ein Verfahren zur Darstellung mehrerer Ereignisse auf einem Bildschirm zu entnehmen. Jedes Ereignis wird bezüglich seiner Eigenschaften durch eines von mehreren möglichen Zeichen und durch eine von mehreren möglichen Farben gekennzeichnet. Mit Hilfe dieses Verfahrens werden z. B. in einem Sichtgerät eines Flugzeugs die detektierten Bodenradaranlagen angezeigt. Das "Ereignis" ist im Prinzip punktförmig, d. h. es geht nicht um die Darstellung von flächenhaft ausgedehnten Objekten.

Aus der DE-OS 16 23 586 ist ein Verfahren zur Erzielung einer True-Motion-Darstellung bekannt. Dazu werden auf einem Radarbildschirm sich bewegende Objekte durch Bewegungskurven dargestellt unter intensitätsmässiger Hervorhebung der aktuellen Position. Feststehende Radarziele werden in Abhängigkeit vom Echo mit unterschiedlichen Farben dargestellt. Unterschiedliche Zielarten werden durch verschiedene Farben visuell unterscheidbar angezeigt (vgl. Seite 5, Absatz 2). Auch hier geht es nicht um eine Darstellung flächenhafter Objekte.

Aus der DE-OS 23 18 856 ist ein Zielobjektauswerter für Marine-Ueberwasser-Radaranlagen bekannt. Um Schiffe zu detektieren, werden die azimutalen Längen der Zielobjekte in Abhängigkeit vom Abstand daraufhin überprüft, ob sie einen bestimmten Wert nicht überschreiten. Ein Diskriminator spricht auf eine maximale Anzahl von aufeinanderfolgenden azimutalen Zielvorderrandsignalimpulsen an, wobei die maximale Anzahl mit sukzessive zunehmenden Entfernungen abnimmt, um zu unterscheiden zwischen Landmassen-Zielobjekten (die in azimutaler Richtung grösser als eine vorbestimmte tatsächliche Länge sind, die eine maximale Schiffslänge darstellt), und Zielobjekten unterhalb der vorbestimmten tatsächlichen Länge (in azimutaler Richtung). Die kleinen Objekte werden identifiziert, da sie eine Kollisionsgefahr mit sich bringen können. Die beschriebene Radaranlage entspricht von daher im wesentlichen der in der DE 20 61 129 B2 offenbarten.

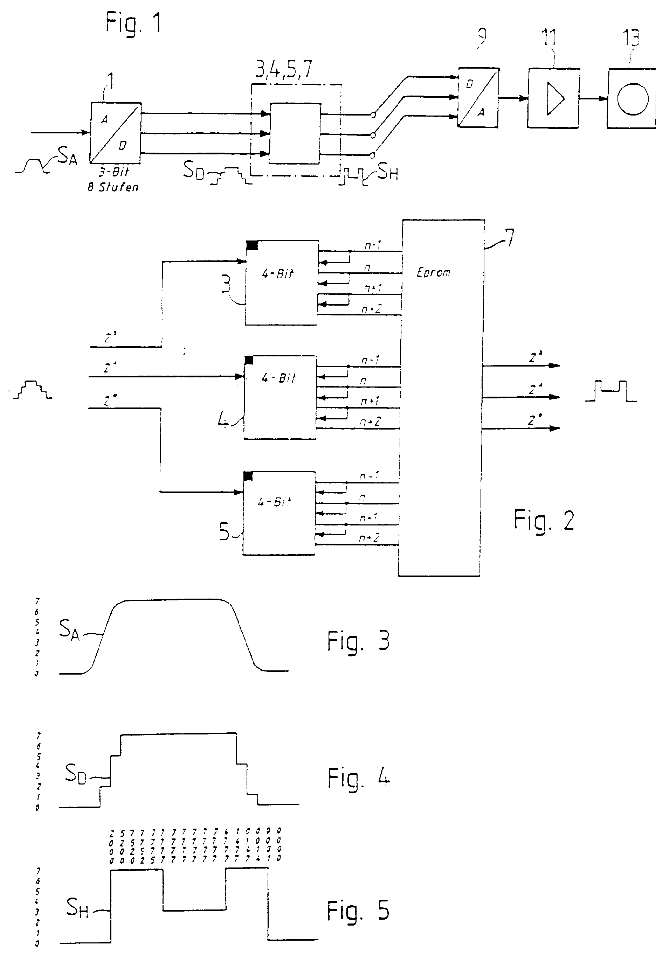

Aus der Publikation EBERT, H.: Digitale Verarbeitung von Radarsignalen in der Flugsicherung. In: INTERVARIA, 3/1969, Seiten 293 ff ist ein System für die digitale Verarbeitung von Radarsignalen in der Flugsicherung bekannt. Um die Luftlage darzustellen, werden die von vier aufeinanderfolgenden Umdrehungen der Radarantenne stammenden Flugzielpositionen mittels eines Kreissymbols dargestellt. Die Helligkeit der Darstellung wird mit zunehmendem "Alter" der Positionsmeldung stufenweise herabgesetzt (vgl. Abb. 5). Zur Zielerkennung, insbesondere zur Erkennung von Anfang und Ende und zur Bestimmung der Mitte eines Zieles wird ein sogenannter Wanderfensterdetektor eingesetzt, der unter Zuhilfenahme von Schwellenwerten die innerhalb einer Antennenkeulenbreite und einem bestimmten Entfernungsintervall empfangenen und quantisierten Echoimpulse auf ihre Korrelation untersucht (Seite 295, linke Spalte, unterster Absatz ff).

PLOWMAN, J.C: Automatic Radar Data Extraction by Storace Tube and Delay Line Techniques. In: Journal Brit. I.R.E.,October 1963, Seiten 317 ff befasst sich mit der Echoerkennung einer Radaranlage. Das Radarsignal wird in zwei Speicherröhren zwischengespeichert (Fig. 4). Auf die Speicherröhren folgt ein Verzögerungsnetzwerk mit gleichmässig beabstandeten Abtastern. Ein Komparatorschaltkreis bestimmt, ob die Hüllkurve grösser als ein gewisser Schwellenwert ist, ob sie zentriert ist und eine bestimmte Form hat. Falls diese Kriterien erfüllt sind, wird ein Erkennungspuls erzeugt (Seite 320, rechte Spalte).

Die DE-AS 1 279 132 offenbart ein Verfahren zur Anzeigeunterdrückung dichter reflektierender Zonen bei einer Impulsradaranlage. Dies soll dadurch erreicht werden, dass - erstens - die quantisierten, binären Signale in einem Speicher für eine Zeit gespeichert werden, welche um n Zeitstufen kürzer als die Dauer einer Folgeperiode ist, wobei n gleich der Stufenzahl des Verschieberegisters ist, dass - zweitens - an den Ausgang des Speichers ein zweites Verschieberegister mit n+1-Stufen angeschlossen ist, und dass - drittens - die Ausgänge der einzelnen Stufen des zweiten Verschieberegisters mit weiteren Eingängen der logischen Schaltung verbunden sind (Spalte 3, zweitunterster Absatz). Unerwünschte Echos von Hindernissen mit grossen Abmessungen, wie Gebäuden, Wolken oder dgl. werden auf diese Weise effizient von den Nutzsignalen abgetrennt.

Aus der US 4,906,940 ist ein Bilderkennungsverfahren bekannt, das zweidimensionale Bilder verarbeitet. Um bestimmte Muster zu erkennen, werden um ausgewählte Merkmale des Bildes sog. "Kraftfelder" gelegt. Als nächstes werden simulationsmässig verformbare Schablonen ins Bild gebracht, auf welche die Kraftfelder wirken können. Wenn die Schablone (template) unter Wirkung der genannten Kraftfelder in einen bestimmten, deformierten Zustand konvergiert haben, werden gewisse Merkmale der Schablone ausgewertet. Es wird u. a. gezeigt, wie ein Bild (Fig. 15) in mehreren Teilschritten (Fig. 16-21) verarbeitet wird, bis die Bildmuster erkannt worden sind (Fig. 22). Einer der verschiedenen Teilschritte umfasst die Ueberhöhung von Kanten (Spalte 30, Zeilen 13-50; Fig. 17).

Aus der DE 20 66 199 C3 ist eine Radaranlage mit Festzielunterdrückung bekannt. Die Festzielunterdrückung wird dabei so ausgeführt, dass eine geringste Beeinträchtigung der Bewegtzielerkennung erfolgt, indem ein variabler, relativer Gewichtsfaktor für das Azimutfilter verwendet wird.

Der Erfindung liegt die Aufgabe zugrunde, ein Verfahren zur Darstellung von Echo-Signalen so zu verbassern, daß eine Helligkeitsübersteuerung im Radarbild bei Vorhandensein flächenhaft ausgedehnter Echostrukturen vermieden wird und dadurch Einzelheiten im Radarbild wesentlich deutlicher zu erkennen sind.

Die Aufgabe ist bei einem Verfahren zur Darstellung von Radar-Echo-Signalen der im Oberbegriff des Anspruchs 1 definierten Gattung erfindungsgemäß durch die Merkmale im Kennzeichenteil des Anspruchs 1 gelöst.

Die Aufgabe ist gleicher maßen bei einer Schaltungsanordnung zur Darstellung von Radar-Echo-Signalen der im Oberbegriff des Anspruchs 6 definierten Gattung erfindungsgemäß durch die Merkmale im kennzeichenteil des Anspruchs 6 gelöst.

Durch das erfindungsgemäße Verfahren erhält das Radarbild eine kartographische Erscheinungsform, bei welchem die vom Radar erfaßten reflektierenden Objekte mit klarer, hervorstechender Kontur scharf umrissen abgebildet sind. Zum einen sind dadurch die ausgedehnten Objekte selbst besser zu erkennen und zum anderen treten durch die insgesamt reduzierte mittlere Helligkeit des Radarbildes auch Einzelheiten, wie sehr kleine oder nur schwach reflektierende Objekte, deutlicher hervor. Der insbesondere bei Nachtfahrten störende Effekt der Helligkeitsübersteuerung ist eliminiert, so daß auch die Notwendigkeit einer Reduzierung der Bildschirmhelligkeit mit der Folge der Unterdrückung kleinerer Objekte oder Objekte mit schlechter Reflektionseigenschaft und dadurch kleiner Intensität entfällt.

Beim erfindungsgemäßen Verfahren wird das Signal zur Hellsteuerung am Echo-Signalanfang auf einen vorgegebenen hohen Wert gesetzt, danach unabhängig vom weiteren Verlauf des Echo-Signals auf einen niedrigeren Wert zurückgesetzt, am Echo-Signalende vorübergehend wieder auf den hohen Wert und danach auf Null gesetzt. Der reduzierte Wert des Hellsteuersignals ist vorzugsweise ein mittlerer, kann aber jeden beliebigen Wert, auch Null, annehmen.

Die Schaltungsanordnung zur Durchführung des erfindungsgemäßen Verfahrens ist in dem Patentanspruch 6 angegeben.

Gemäß einer vorteilhaften Ausgestaltung des erfindungsgemäß Verfahrens wird das mit reduzierter Intensität wiedergegebene Flächeninnere der flächenhaften Echostrukturen farbig unterlegt. Dieses wird dann, statt grau, farbig wiedergegeben.

Im folgenden wird die Erfindung anhand der beiliegenden Zeichnungen, die nur einen Ausführungsweg darstellen, näher erläutert. Es zeigen:
- Fig. 1: einen Übersichtsplan einer Anordnung zur Darstellung von Radar-Echo-Signalen,
- Fig. 2: eine ausführliche Darstellung des in Fig. 1 von einer strichpunktierten Umrahmungslinie abgegrentzen Teiles von Fig. 1,
- Fig. 3: ein Radar-Echo-Signal,
- Fig. 4: ein Fig. 3 entsprechendes, digitales Signal,
- Fig. 5: ein aus dem Signal nach Fig. 4 hervorgegangenes Signal zur Helligkeitssteuerung der Radar-Bildröhre,
- Fig. 6: ein Rundsichtradarbild, wie es unmittelbar mit dem Radar-Echo-Signal erhalten wird,
- Fig. 7: ein Radarbild etwa derselben etwas vergrößerten Rundsicht, erhalten nach dem erfindungsgemäßen Verfahren bzw. mit der erfindungsgemäßen Schaltungsanordnung.

Nach Fig. 1 wird das vom (nicht dargestellten) Empfänger des Radargeräts empfangene (analoge) Echo-Signal S_{A} (vergl. Fig. 3) einem Analog-Digital-Wandler 1 zugeführt, dessen Ausgangssignalbereich in acht Stufen (0, 1, 2, ... 7) unterteilt ist. Am Ausgang des Wandlers 1 erscheint das entsprechende, digitale Signal S_{D} (vergl. Fig. 4), das in drei Speichern (3, 4, 5) gespeichert und einer elektrischen Baueinheit 7 zugeführt wird, deren Ausgangssignalbereich in drei Stufen, Minimum, Maximum, mittlerer Wert (Werte 0, 7, 4 in Fig. 5) unterteilt ist.

Der Ausgang der Baueinheit 7 nimmt seinen minimalen Wert an, wenn jeder von vier aufeinanderfolgenden Momentanwerten des Signals S_{D} minimal (Null) ist, er nimmt seinen maximalen Wert an, wenn einer der vier Momentanwerte kleiner als der maximale Momentanwert ist, und er nimmt den mittleren Wert an, wenn jeder der vier Momentanwerte den Maximalwert hat. Dazu ist die elektrische Baueinheit 7 zweckmäßig ein entsprechend programmiertes EPROM. In Fig. 5 sind über der Signalkurve S_{H} Gruppen von jeweils vier Momentanwerten des Signals S_{D} angegeben, aus denen der zugehörige Wert des Signals S_{H} nach dem vorgenannten Algorithmus folgt.

Das Ausgangssignal S_{H} der elektrischen Baueinheit 7 (EPROM) wird in einem Digital-Analog-Wandler 9 umgewandelt, dessen analoges Ausgangssignal in einem Verstärker 11 verstärkt wird und dann zur Helligkeitssteuerung der Bildwiedergaberöhre 13 oder anderer Bildwiedergabeeinheiten dient.

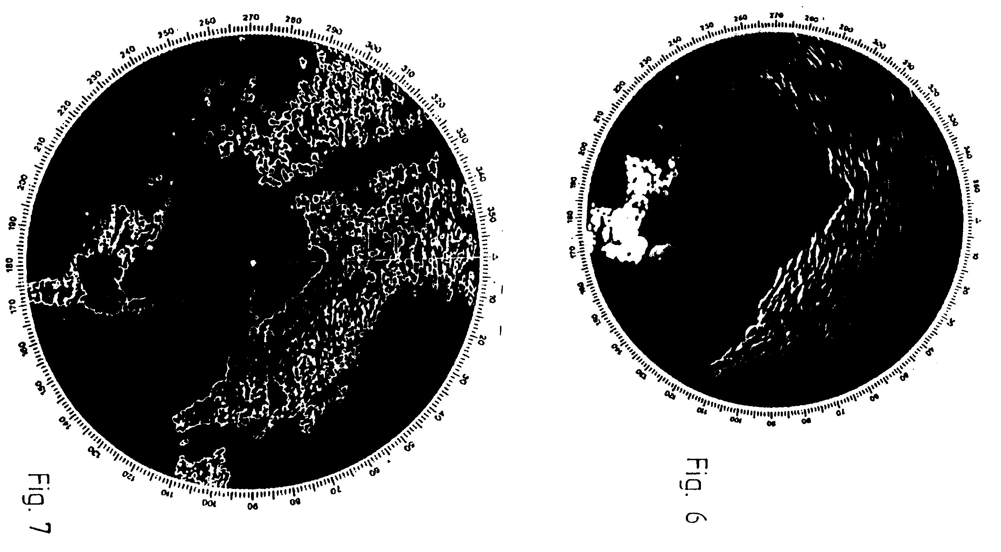

Durch den Algorithmus, der den Zusammenhang zwischen den vier Momentanwertsignalen und dem Ausgangssignal S_{H} der elektrischen Baueinheit 7 angibt, wird erreicht, daß die Flanken am Anfang und Ende des Ausgangssignals S_{H} steiler als die des Echo-Signals S_{A} sind, und ebenso steil sind die Signalübergänge am Anfang und Ende des Bereichs, in dem das Signal S_{H} seinen mittleren Wert hat. Dadurch entstehen im Radarbild bei eine flächige Echostruktur ergebenden zusammenhängenden, d. h. vom gleichen Objekt reflektierten, Radar-Echo-Signalen scharfe Randkonturen einer grauen Fläche. So können auch bei üblicher Darstellung unbefriedigend wiedergegebene Objekte zur Geltung kommen. Dies ist aus einem Vergleich des in Fig. 6 dargestellten Rundsichtradarbildes, das unmittelbar aus den Radar-Echo-Signalen erhalten ist, mit dem in Fig. 7 dargestellten Radarbild etwa derselben etwas vergrößerten Rundsicht, das nach dem vorliegenden Verfahren bzw. mit der vorliegenden Schaltungsanordnung erhalten ist, ersichtlich.

Mit dieser vorstehend beschriebenen Schaltungsanordnung wird in sehr einfacher Weise das neue Verfahren zur Darstellung von Radar-Echo-Signalen realisiert, bei dem - wie üblich - aus dem Radar-Echo-Signal ein Signal zur Hellsteuerung einer Wiedergabeeinheit für ein Radarbild abgeleitet wird. Bei dem neuen Verfahren werden im Gegensatz zu den bisher bekannten Verfahren dieser Art flächige Echostrukturen, die auf dem Radarbild von ausgedehnten Objekten entstehen, nicht ganzflächig hell, sondern längs ihrer äußeren Flächenumrißlinien, ihrer Kontur, mit großer Intensität, d. h. sehr hell, und im Flächeninneren mit demgegenüber reduzierter Intensität, d. h. helligkeitsgedämpft, wiedergegeben. Dadurch entsteht ein kontrastreiches Radarbild mit kartographischem Eindruck mit insgesamt geringerer mittlerer Helligkeit, welches die vorstehend ausführlich beschriebenen Vorteile bietet.

## Patentansprüche

1. Verfahren zur Darstellung von Radar-Echo-Signalen, bei welchem aus dem Radar-Echo-Signal ein Signal zur Hellsteuerung einer Wiedergabeeinheit für ein Radarbild abgeleitet wird, wobei auf dem Radarbild erscheinende, flächige Echostrukturen von ausgedehnten reflektierenden Objekten längs ihren äusseren Flächenumrisslinien (Konturen) mit hoher Intensität dargestellt werden, dadurch gekennzeichnet, dass sie im Flächeninneren mit demgegenüber reduzierter, mittlerer vom Verlauf des Radar-Echo-Signals unabhängiger Intensität wiedergegeben werden.

2. Verfahren nach Anspruch 1, dadurch gekennzeichnet, dass das mit reduzierter Intensität wiedergegebene Flächeninnere farbig unterlegt wird.

3. Verfahren nach einem der Ansprüche 1 bis 2, dadurch gekennzeichnet, dass das Radar-Echo-Signal (S_{A}) in ein 8-stufiges Digitalsignal (S_{D}) gewandelt wird.

4. Verfahren nach Anspruch 3, dadurch gekennzeichnet, dass das 8-stufige Digitalsignal (S_{D}) in drei Speichern (3, 4, 5) gespeichert wird.

5. Verfahren nach einem der Ansprüche 1 bis 4, dadurch gekennzeichnet, dass ein für die Helligkeitssteuerung der Wiedergabeeinheit (13) massgebendes Signal (S_{H}) aus mehreren, insbesondere vier aufeinanderfolgenden Momentanwerten des Radar-Echo-Signals (S_{D}) so erzeugt wird, dass das Signal (S_{H}) einen minimalen Wert annimmt, wenn jeder der Momentanwerte 0 ist, einen maximalen Wert annimmt, wenn einer der Momentanwerte kleiner als deren Höchstwert ist, und einen konstanten, reduzierten Wert annimmt, wenn jeder der Momentanwerte deren Höchstwert hat.

6. Schaltungsanordnung zur Darstellung von Radar-Echo-Signalen, in der in einem Signallauf zwischen einem Radar-Echo-Empfänger und einer Einheit (13) zur Wiedergabe des Radarbildes eine elektrische Baueinheit (7) angeordnet ist, die aus jeweils mehreren, aufeinanderfolgenden Momentanwerten des Radar-Echo-Signals (S_{A}) ein für die Helligkeitssteuerung der Wiedergabeeinheit (13) massgebendes Signal (S_{H}) erzeugt, so dass auf dem Radarbild erscheinende flächige Echostrukturen von ausgedehnten reflektierenden Objekten längs ihren äusseren Flächenumrisslinien (Konturen) mit hoher Intensität wiedergegeben werden und dadurch gekennzeichnet daß sie im Flächeninneren mit demgegenüber reduzierter, mittlerer, vom Verlauf des Radar-Echo-Signals unabhängiger Intensität wiedergegeben werden.

7. Schaltanordnung nach Anspruch 6, dadurch gekennzeichnet, dass ein Analog-Digital-Wandler (1) vorgesehen ist, der das Radar-Echo-Signal in ein 8-stufiges digitales Signal (S_{D}) wandelt.

8. Schaltanordnung nach einem der Ansprüche 6 bis 7, dadurch gekennzeichnet, dass die Einheit (13) so ausgestaltet ist, dass aus jeweils mehreren, aufeinanderfolgenden Momentanwerten des Radar-Echo-Signals das für die Helligkeitssteuerung massgebende Signal (S_{H}) so erzeugt wird, dass es einen minimalen Wert annimmt, wenn jeder der Momentanwerte 0 ist, einen maximalen Wert annimmt, wenn einer der Momentanwerte kleiner als deren Höchstwert ist, und einen mittleren Wert annimmt, wenn jeder der Momentanwerte deren Höchstwert hat.

## Claims

1. Process for displaying radar echo signals, in which an unblanking signal for a display unit for a radar picture is derived from the radar echo signal, whereby large-area echo patterns of extensive, reflecting objects are displayed with high intensity along their outer contours, **characterised in that**, on the other hand, in the inner area they are reproduced with reduced, average intensity irrespective of the waveform of the radar echo signal.

2. Process according to Claim 1, **characterised in that** the inner area which is reproduced with reduced intensity has a colour underlay.

3. Process according to one of the Claims 1 to 2, **characterised in that** the radar echo signal (S_{A}) is converted into an 8-stage digital signal (S_{D}).

4. Process according to Claim 3, **characterised in that** the 8-stage digital signal (S_{D}) is stored in three memories (3, 4, 5).

5. Process according to one of the Claims 1 to 4, **characterised in that** a signal (S_{H}) defined for the brightness control of the display unit (13) is generated from several, in particular four, successive instantaneous values of the radar echo signal, so that the signal (S_{H}) assumes a minimum value if any of the instantaneous values is 0, and assumes a maximum value if one of the instantaneous values is less than their maximum value, and assumes a constant, reduced value if any of the instantaneous values has their maximum value.

6. Circuit arrangement for displaying radar echo signals, in which an electrical module (7) is arranged in a signal path between a radar echo receiver and a unit (13) for reproducing the radar picture, which electrical module (7) generates a signal (S_{H}) defined for the brightness control of the display unit (13) from several successive instantaneous values of the radar echo signal (S_{A}), so that large-area echo patterns of extensive, reflecting objects appearing on the radar picture are reproduced with high intensity along their outer contours and, **characterised in that**, on the other hand, in the inner area they are reproduced with reduced, average intensity irrespective of the waveform of the radar echo signal.

7. Circuit arrangement according to Claim 6, **characterised in that** an analogue/digital converter (1) is provided, which converts the radar echo signal into an 8-stage digital signal (S_{D}).

8. Circuit arrangement according to one of the Claims 6 to 7, **characterised in that** the unit (13) is designed so that the signal (S_{H}) defined for the brightness control is generated from several successive instantaneous values of the radar echo signal, so that it assumes a minimum value if any of the instantaneous values is 0, and assumes a maximum value if one of the instantaneous values is less than their maximum value, and assumes an average value if any of the instantaneous values has their maximum value.

## Revendications

1. Procédé destiné à représenter des signaux d'écho radar, par lequel un signal dérivé du signal d'écho radar est destiné à la commande du tube cathodique d'une unité de reproduction de l'image radar, les structures planes de l'écho qui apparaissent sur l'image radar et qui sont provoquées par de vastes objets réfléchissants, étant représentées avec une forte intensité le long de leurs lignes de profil extérieures (contours), caractérisé par le fait que lesdites structures sont reproduites à l'intérieur des surfaces avec une intensité réduite, moyenne par rapport au contour, et indépendante des variations du signal d'écho radar.

2. Procédé conforme à la revendication 1, caractérisé par le fait que l'intérieur des surfaces reproduit avec une intensité réduite est coloré.

3. Procédé conforme à l'une des revendications 1 a 2, caractérisé par le fait que le signal d'écho radar (S_{A}) est converti en un signal numérique à 8 niveaux (S_{D}).

4. Procédé conforme à la revendication 3, caractérisé par le fait que le signal numérique à 8 niveaux (S_{D}) est mémorisé dans trois mémoires (3, 4, 5).

5. Procédé conforme à l'une des revendications 1 à 4, caractérisé par le fait qu'un signal (S_{H}), déterminant pour la commande de la luminosité de l'unité de reproduction (13), est généré à partir de plusieurs, notamment quatre, valeurs instantanées successives du signal d'écho radar (S_{D}), de façon à ce que le signal (S_{H}) prenne une valeur minimale lorsque chacune des valeurs instantanées est égale à 0, prenne une valeur maximale lorsque l'une des valeurs instantanées est inférieure à sa valeur la plus élevée, et prenne une valeur constante réduite, lorsque chacune des valeurs instantanées est égale à sa valeur la plus élevée.

6. Configuration de circuits destinée à représenter un signal d'écho radar, dans laquelle, dans le trajet du signal entre un récepteur d'écho radar et une unité (13) destinée à reproduire l'image radar, est intégré un composant électrique (7) qui, toujours à partir de plusieurs valeurs instantanées successives du signal d'écho radar (S_{A}), génère un signal (S_{H}) déterminant pour la commande de la luminosité de l'unité de reproduction (13), de façon à ce que les structures planes de l'écho qui apparaissent sur l'image radar et qui sont provoquées par de vastes objets réfléchissants, soient reproduites avec une forte intensité le long de leurs lignes de profil extérieures (contours), caractérisée par le fait que les dites structures sont reproduites à l'intérieur des surfaces avec une intensité réduite, moyenne par rapport au contour et indépendante des variations du signal d'écho radar.

7. Configuration de circuits conforme à la revendication 6, caractérisée par le fait qu'un convertisseur analogique-numérique (1) est destiné à convertir le signal d'écho radar en un signal numérique (S_{D}), à 8 niveaux.

8. Configuration de circuits conforme à l'une des revendications 6 à 7, caractérisée par le fait que l'unité (13) est conçue de telle façon qu'un signal (S_{H}), déterminant pour la commande de la luminosité, est toujours généré à partir de plusieurs valeurs instantanées successives du signal d'écho radar de façon à prendre une valeur minimale lorsque chacune des valeurs instantanées est égale à 0, à prendre une valeur maximale lorsque l'une des valeurs instantanées est inférieure à sa valeur la plus élevée, et à prendre une valeur moyenne lorsque chacune des valeurs instantanées est égale à sa valeur la plus élevée.
